# EUROPÄISCHE PATENTSCHRIFT

(11) **EP 0 756 101 B1**
(45) Veröffentlichungstag und Bekanntmachung des Hinweises auf die Patenterteilung: **27.10.1999**
(21) Anmeldenummer: 96890124.9
(22) Anmeldetag: 15.07.1996
(51) Int. Cl.: F16D 69/04

(54) **Verfahren zum Herstellen eines ebenen Reibringes**
Method of manufacturing an annular friction plate
Procédé de fabrication d'un anneau de friction plan

(30) Priorität: 25.07.1995 AT 126195
(43) Veröffentlichungstag der Anmeldung: 29.01.1997
(73) Patentinhaber: Miba Frictec GmbH & Co. KG., 4663 Laakirchen (AT)
(72) Erfinder: Kremsmair, Christian, 4655 Vorchdorf (AT); Hartner, Gerhard, 4654 Bad Wimsbach (AT)
(74) Vertreter: Hübscher, Heiner, Dipl.-Ing.

(56) Entgegenhaltungen:
- FR-A- 2 607 886
- US-A- 4 260 047

## Beschreibung

Die Erfindung bezieht sich auf ein Verfahren zum Herstellen eines ebenen Reibringes, bestehend aus einem Tragring und aus einem auf wenigstens einer Tragringseite vorgesehenen, zumindest angenähert radiale Ölnuten bildenden Reibbelag, der zunächst aus einer Reibbelagbahn mit von zumindest einer Umfangsseite ausgehenden Schlitzen für die späteren Ölnuten ausgeschnitten und dann auf den Tragring aufgeklebt wird.

Zum Herstellen ebener Reibringe ist es bekannt (EP 0 305 582 A1), den Reibbelag als in sich geschlossenen Ring mit den die späteren Ölnuten bildenden Schlitzen aus einer Reibbelagbahn auszustanzen, die nach Papiermachart aus einem organischen Reibwerkstoff hergestellt wird, und diesen Reibbelagring auf den Tragring aufzukleben. Das Ausschneiden eines in sich geschlossenen Reibbelagringes, der bereits die Schlitze für die späteren Ölnuten aufweist, stellt zwar wegen der einfachen Handhabung einen geringen Herstellungsaufwand sicher, doch ergibt sich aufgrund der Ringform der Reibbeläge ein hoher Abfall an der Reibbelagbahn und damit eine unbefriedigende Materialausnützung. Wird der Reibbelag nach einem anderen bekannten Herstellungsverfrahren (EP 0 583 516 Al) aus einzelnen Reibbelagsektoren aufgebaut, die von einem Reibbelagstreifen abgeschnitten und mit gegenseitigem Abstand auf den Tragring aufgeklebt werden, um zwischen benachbarten Reibbelagsektoren radiale Ölnuten zu erhalten, so ergibt sich eine gute Materialausnützung für den Reibbelag, allerdings mit dem erheblichen Nachteil einer aufwendigen Herstellung, weil die einzelnen nicht zusammenhängenden Reibbelagsektoren vor dem Aufkleben auf den Tragring entsprechend positioniert werden müssen.

Der Erfindung liegt somit die Aufgabe zugrunde, ein Verfahren zum Herstellen eines ebenen Reibringes der eingangs geschilderten Art so zu verbessern, daß eine einfache, wenig aufwendige Handhabung des Reibbelages mit einer guten Materialausnützung verbunden werden kann.

Die Erfindung löst die gestellte Ausgabe dadurch, daß der Reibbelag in Form eines Streifens aus der Reibbelagbahn ausgeschnitten und im Bereich der Verbindungsstege zwischen den durch die Schlitze voneinander getrennten Reibbelagsektoren polygonartig zu einem Ring gebogen und auf den Tragring aufgeklebt wird.

Durch das Ausschneiden von Reibbelagstreifen aus der Reibbelagbahn kann eine gute Materialausnützung der Materialbahn sichergestellt werden, weil ja zumindest bei einem geraden Streifenverlauf die einzelnen Streifen so nebeneinandergereiht werden können, daß jeweils der Längsrand, der die spätere äußere Umfangsseite des Reibbelages bildet, an dem die spätere innere Umfangsseite bildenden Längsrand anliegt. Wird ein gebogener Streifenverlauf gewählt, was bei einer Forderung nach einer beschränkten Anzahl von Reibbelagsektoren im Zusammenhang mit einer begrenzten Schlitzbreite wegen des durch die Schlitzausbildung vorgegebenen maximal möglichen Biegewinkels zwischen den Reibbelagsektoren notwendig werden kann, so beschränkt sich der anfallende Abfall auf die Schlitze und den sich zwischen den gebogenen Reibbelagstreifen ergebenen Zwickelbereich. Da die Reibbelagsektoren durch die die späteren Olnuten bildenden Schlitze bis auf einen verbleibenden Verbindungssteg voneinander getrennt sind, der eine Gelenkverbindung zwischen den Reibbelagsektoren ermöglicht, können die vorzugsweise durch ein Stanzen ausgeschnittenen Reibbelagstreifen ohne weiteres jeweils zu einem Polygonring gebogen werden. der auf einen entsprechenden Tragring aufgeklebt werden kann. Wegen der zusammenhängenden Reibbelagsektoren ergibt sich eine einfache Handhabung, was eine wenig aufwendige Herstellung bei einer guten Materialausnutzung erlaubt. Die Abweichung des Polygonringes von der Kreisform spielt für die Funktion des Reibringes keine Rolle, zumal die Reibbelagsektoren im Bereich ihrer Längsränder entlang von Kreisbögen ausgeschnitten werden können, die an den Außen- bzw. Innendurchmesser des Tragringes angepaßt sind.

Unterschiedliche Kreisbogenradien im Bereich der Außen- und der Innenumfangsseite bedingen allerdings einen geringfügigen Abfall aufgrund der sich zwischen den aneinanderstoßenden Außen- und Innenseiten der Reibbelagstreifen ergebenden Zwickel. Um einen solchen, wenn auch vergleichsweise geringen Abfall zu vermeiden, können die sich zwischen den Schlitzen ergebenden Reibbelagsektoren der Reibbelagstreifen auf der Außen- und Innenumfangsseite entlang von übereinstimmenden Kreisbögen ausgeschnitten werden. Die dadurch bedingten Abweichungen gegenüber dem Außen- bzw. Innenumfang des Tragringes sind für die Wirkungsweise des fertigen Reibringes unerheblich.

Besonders vorteilhafte Herstellungsbedingungen ergeben sich in weiterer Ausbildung der Erfindung dann, wenn auf die dem Tragring zugekehrte Seite der Reibbelagbahn vor dem Ausschneiden des Reibbelagstreifens eine doppelseitig wirksame Klebefolie aufgeklebt wird, mit deren Hilfe der Reibbelag nach dem Ausschneiden auf den Tragring aufgeklebt werden kann. Durch diese beidseitige Klebefolie wird nicht nur das Aufkleben des aus der Reibbelagbahn ausgeschnittenen Reibbelagstreifens auf den Tragring erleichtert, sondern auch eine Verstärkung der Reibbelagstreifen im Bereich der Verbindungsstege zwischen den Reibbelagsektoren erreicht, so daß diese Verbindungsstege in einer für das Biegen innerhalb der Belagebene vorteilhaften Art ausreichend schmal ausfallen können, ohne den Zusammenhang der Reibbelagsektoren während der Handhabung der Reibbelagstreifen zu gefährden.

Beim polygonartien Biegen der ausgeschnittenen Reibbelagstreifen stellen sich im Außenbereich der Verbindungsstege Zugkräfte und im Innenbereich Druckkräfte ein, was unter Umständen die Gefahr eines Auffaltens dieser Verbindungsstege aus der Reibbelagebene mit sich bringt. Um dadurch bedingte Nachteile zu vermeiden, kann der Reibbelag durch ein Warmpressen auf den Tragring aufgeklebt werden, so daß die im Bereich der Verbindungsstege auf die Reibbelagstreifen ausgeübten Andrückkräfte an den Tragring ein solches Auffalten mit Sicherheit unterbinden.

Anhand der Zeichnung wird das erfindungsgemäße Verfahren zum Herstellen eines ebenen Reibringes näher erläutert. Es zeigen
- Fig. 1: einen herzustellenden Reibring in einer vereinfachten Draufsicht,
- Fig. 2: einen Schnitt nach der Linie ll-ll der Fig. 1 in einem größeren Maßstab,
- Fig. 3: mehrere nebeneinandergereihte, aus einer Reibbelagbahn auszuschneidende Reibbelagstreifen ausschnittsweise in einer Draufsicht und
- Fig. 4: einen aus einer Reibbelagbahn ausgeschnittenen Reibbelag ausschnittsweise in einem größeren Maßstab.

Der dargestellte Reibring besteht aus einem stählernen Tragring 1, der beidseitig mit einem Reibbelag 2 versehen ist. Dieser Reibbelag 2, der beispielsweise aus einem nach Papierart hergestellten, organischen Reibwerkstoff gebildet wird, weist einzelne, sich zwischen radialen Ölnuten 3 ergebende Reibbelagsektoren 4 auf. Gemäß dem Ausführungsbeispiel werden diese Ölnuten 3 durch abwechselnd von der inneren und der äußeren Umfangsseite ausgehende Schlitze 5 gebildet. die sich bis auf einen schmalen Verbindungssteg 6 zwischen den Reibbelagsektoren 4 über die Breite des Reibbelages 2 erstrecken. Die von der Innenumfangsseite ausgehenden Olnuten 3 bringen den Vorteil mit sich, daß das der Fliehkraft unterworfene Öl in diesen Ölnuten 3 gestaut wird und das Trennen von aneinanderliegenden Reibringen unterstützt.

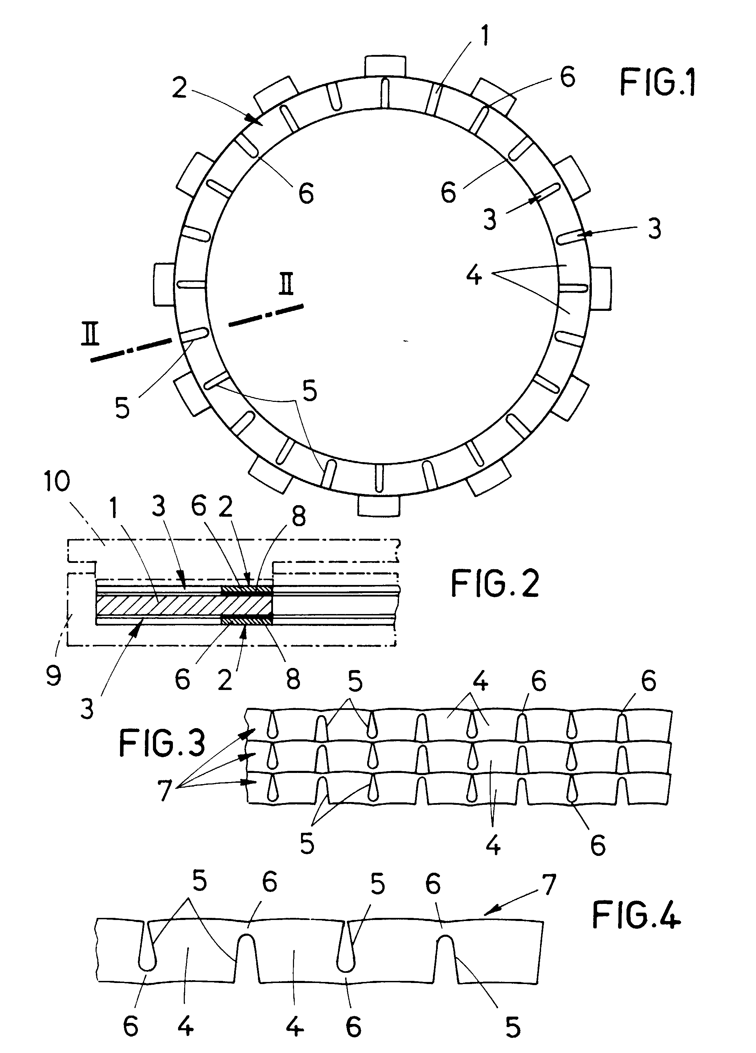

Zur Herstellung des beschriebenen Reibringes wird auf den Tragring 1 ein Reibbelag 2 aufgeklebt. Zu diesem Zweck werden aus einer entsprechenden Reibbelagbahn Reibbelagstreifen 7 ausgestanzt, die nebeneinandergereiht sind und abwechselnd von den beiden Längsseiten ausgehende Schlitze 5 aufweisen. Da diese Reibbelagstreifen 7 einen übereinstimmenden Längsrandverlauf auf beiden Seiten zeigen, schließen sie abstandslos aneinander an, so daß beim Ausstanzen dieser Reibbelagstreifen 7 lediglich in den Schlitzbereichen Abfälle anfallen. Wie den Fig. 3 und 4 entnommen werden kann, sind die Reibbelagsektoren 4 zwischen den Schlitzen 5 durch übereinstimmende Kreisbögen begrenzt, so daß nach einem polygonartigen Biegen der Randstreifen über die sich im Bereich der Schlitze 5 ergebenden Verbindungsstege 6 ringförmige Reibbeläge 2 erhalten werden, die entsprechend den Fig. 1 und 2 auf einen Tragring 1 aufgeklebt werden können. Bei der Ausbildung der Schlitze 5 ist naturgemäß der spätere Biegewinkel zwischen den Reibbelagsektoren 4 zu berücksichtigen, um den die Flanken der Schlitze 5 gegenüber ihrem späteren Verlauf im Bereich der Reibbelagstreifen 7 abweichen müssen. Dies bedeutet bei den vom Außenumfang ausgehenden Schlitzen 5 eine Materialeinsparung.

Zum Aufkleben der zu einem Ring polygonartig gebogenen Reibbelagstreifen 7 könnten der Tragring 1 und/oder die Reibbelagstreifen 7 mit einer Klebeschicht versehen werden. Besonders einfache Verhältnisse werden allerdings mit einer doppelseitig wirkenden Klebefolie 8 erhalten, die zunächst auf die Reibbelagbahn aufgebracht wird, aus der dann die Reibbelagstreifen 7 ausgeschnitten werden. Zum beidseitigen Bekleben eines Tragringes 1 mit solchen Reibbelagstreifen 7 braucht zunächst lediglich ein Reibbelagstreifen 7 mit nach oben weisender Klebefolie 8 in eine entsprechende Form 9 eingelegt zu werden, wie sie in der Fig. 2 strichpunktiert angedeutet ist, bevor der Tragring 1 auf diesen in der Form 9 in einer Ringform gehaltenen Reibbelagstreifen 7 aufgelegt und mit einem weiteren Belagstreifen 7 abgedeckt wird, der durch die Form 9 ebenfalls in die an den Tragring 1 angepaßte Ringform gezwungen wird. Danach kann die Form 9 durch einen Deckel 10 verschlossen und der Reibring unter Druckanwendung erwärmt werden, bis die Klebung über die Klebefolien 8 ausgehärtet ist.

## Patentansprüche

1. Verfahren zum Herstellen eines ebenen Reibringes, bestehend aus einem Tragring und aus einem auf wenigstens einer Tragringseite vorgesehenen, zumindest angenähert radiale Ölnuten bildenden Reibbelag, der zunächst aus einer Reibbelagbahn mit von zumindest einer Umfangsseite ausgehenden Schlitzen für die späteren Ölnuten ausgeschnitten und dann auf den Tragring aufgeklebt wird, dadurch gekennzeichnet, daß der Reibbelag in Form eines Streifens aus der Reibbelagbahn ausgeschnitten und im Bereich der Verbindungsstege zwischen den durch die Schlitze voneinander getrennten Reibbelagsektoren polygonartig zu einem Ring gebogen und auf den Tragring aufgeklebt wird.

2. Verfahren nach Anspruch 1, dadurch gekennzeichnet, daß die sich zwischen den Schlitzen ergebenden Reibbelagsektoren des Reibbelagstreifens auf der Außen- und Innenumfangsseite entlang von übereinstimmenden Kreisbögen ausgeschnitten werden.

3. Verfahren nach Anspruch 1 oder 2, dadurch gekennzeichnet, daß auf die dem Tragring zugekehrte Seite der Reibbelagbahn vor dem Ausschneiden des Reibbelagstreifens eine doppelseitig wirksame Klebefolie aufgeklebt wird, mit deren Hilfe der Reibbelag nach dem Ausschneiden auf den Tragring aufgeklebt wird.

4. Verfahren nach einem der Ansprüche 1 bis 3, dadurch gekennzeichnet, daß der Reibbelag durch ein Warmpressen auf den Tragring aufgeklebt wird.

## Claims

1. A method of producing a flat friction ring comprising a supporting ring and a friction lining provided on at least one side of the supporting ring and forming at least approximately radial oil grooves, the friction lining first being cut from a web of friction lining formed with slots extending from at least one peripheral side for the subsequent oil grooves and then stuck to the supporting ring,
characterised in that the friction lining in strip form is cut out of the web of friction lining and is bent in a polygon to form a ring in the neighbourhood of the connecting webs between the sectors of the friction lining separated by slots, and is stuck on the supporting ring.

2. A method according to claim 1, characterised in that the sectors of the friction lining strip obtained between the slots are cut out on the outer and inner periphery side along coinciding circular arcs.

3. A method according to claim 1 or 2, characterised in that before the strip of friction lining is cut out, an adhesive foil active on both sides is stuck to the side of the web of friction lining facing the supporting ring and is used to stick the friction lining to the supporting ring after cutting out.

4. A method according to any of claims 1 to 3, characterised in that the friction lining is stuck on the supporting ring by hot pressing.

## Revendications

1. Procédé de fabrication d'une bague de friction plane, constitué d'une bague support et d'un revêtement de friction, prévu sur au moins une face de la bague support, constituant des gorges à huile au moins à peu près radiales, qui est d'abord découpé à partir d'une nappe de revêtement de friction dotée de fentes, partant d'au moins une face périphérique pour les gorges à huile ultérieures, puis est appliqué par collage sur la bague support, caractérisé par le fait que le revêtement de friction est découpé sous la forme d'une bande à partir de la nappe de revêtement de friction, et, dans la zone des nervures de liaison situées entre les secteurs de garniture de friction séparés les uns des autres par les fentes, est courbé, en polygone, pour former une bague et est appliqué par collage sur la bague support.

2. Procédé selon la revendication 1, caractérisé par le fait que les secteurs de garniture de friction, qui sont constitués entre les fentes, de la bande de garniture de friction sont découpés sur la face périphérique extérieure et intérieure, le long d'arc de cercle coïncidant.

3. Procédé selon la revendication 1 ou 2, caractérisé par le fait que, sur la face tournée vers la bague support, de la nappe de garniture de friction, avant de procéder au découpage de la bande de garniture de fiction, est appliquée par collage une feuille adhésive collant sur les deux faces, à l'aide de laquelle la garniture de friction est appliquée par collage sur la bague support, après avoir procédé au découpage.

4. Procédé selon l'une des revendications 1 à 3, caractérisé par le fait que la garniture de friction est appliquée par collage sur la bague support, en pratiquant un pressage à chaud.
